# NOUVEAU FASCICULE DE BREVET EUROPEEN

(11) **EP 3 071 722 B2**
(45) Date de publication et mention de la décision concernant l'opposition: **11.06.2025**
(45) Mention de la délivrance du brevet: 29.08.2018
(21) Numéro de dépôt: 14814933.9
(22) Date de dépôt: 19.11.2014
(51) Int. Cl.: C23C 4/02, C23C 4/073, C23C 4/11, C23C 4/129, C23C 4/134, F01D 25/00, F01D 5/28, C23C 4/18

(54) **PROCÉDÉ INTÉGRÉ DE FRITTAGE POUR MICROFISSURATION ET TENUE À L'ÉROSION DES BARRIÈRES THERMIQUES**
INTEGRIERTES SINTERVERFAHREN FÜR MIKRORISSBILDUNGS- UND EROSIONSWIDERSTAND VON WÄRMEBARRIEREN
INTEGRATED SINTERING PROCESS FOR MICROCRACKING AND EROSION RESISTANCE OF THERMAL BARRIERS

(30) Priorité: 19.11.2013 FR 1361348
(43) Date de publication de la demande: 28.09.2016
(73) Titulaire: Safran Aircraft Engines, 75015 Paris (FR)
(72) Inventeur: BILHE, Pascal, Fabrice, F-77550 Moissy-Cramayel Cedex (FR); DUDON, Laurent, Paul, F-77550 Moissy-Cramayel Cedex (FR); MARTINET, Pascal, Jacques, Raymond, F-77550 Moissy-Cramayel Cedex (FR)
(74) Mandataire: Regimbeau
(86) Numéro de dépôt international: PCT/FR2014/052967
(87) Numéro de publication internationale: WO 2015/075381

(56) Documents cités:
- CN-A- 102 994 938
- FR-A1- 2 941 964
- KR-A- 20120 061 634
- US-A1- 2003 203 224
- US-A1- 2004 156 724
- US-A1- 2010 136 258
- US-A1- 2010 224 602

## Description

### DOMAINE TECHNIQUE GÉNÉRAL ET ART ANTÉRIEUR

La présente invention est relative aux barrières thermiques.

Elle concerne plus particulièrement les barrières thermiques du type à céramique (C) YSZ à microfissures transverses.

Dans les turbines aéronautiques comme pour les turbines terrestres, les pièces constituant le corps Haute Pression, telles que la chambre de combustion, les tuyères d'alimentation en carburant, les distributeurs et aubes de turbines haute pression (DHP et MHP), sont protégées par un système isolant thermique de type « barrière thermique » réfractaire.

L'intégrité de ce système est déterminante pour satisfaire les exigences en service des pièces ainsi protégées.

Cependant, dans un fonctionnement normal, il est commun d'observer des problèmes liés à l'érosion par les gaz chauds. Dans les cas des turbomachines à gaz, l'érosion est le résultat combiné de l'érosion engendrée par les multiples explosions en surface des dépôts (phénomènes de cavitation) et de celle due aux cyclages thermiques liés aux arrêts moteurs.

Dans les deux cas, il en résulte une diminution de l'épaisseur d'isolant, par érosion ou micro-écaillage, ce qui a pour conséquence une moindre protection thermique du substrat sous-jacent. La durée de vie des pièces se trouve réduite et celles-ci nécessitent des restaurations fréquentes, ce qui pose un problème en termes d'organisation de maintenance, ainsi qu'en termes de coûts.

Avec les barrières thermiques par dépôt EBPVD (« Electron Beam Physical Vapor Deposition » selon la terminologie anglo-saxonne), les barrières thermiques microfissurées transverses obtenues par projection thermique plasma (procédé dit « APS » ou « Atmospheric Plasma Spray ») sont actuellement le meilleur revêtement répondant à la fois aux exigences de résistance à l'érosion et aux exigences de résistance aux cyclages thermiques.

Cette technique est notamment utilisée pour les pièces massives circulaires comme les pièces de chambres de combustion ou encore pour des pièces plus petites comme des tuyères d'injection de kérosène.

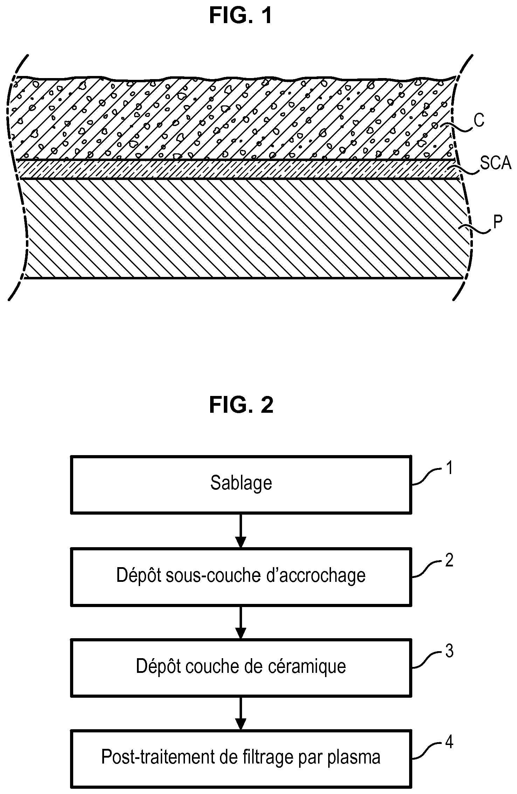

Ainsi que l'illustre la figure 1, la barrière thermique BT déposée sur une pièce P est alors classiquement constituée :
- d'une sous-couche SCA d'un dépôt d'alliage de type MCrAIY (ou M correspond à Ni, Co, Fe et NiCo) qui constitue une couche dite d'accrochage (SCA) ;
- d'une couche C thermiquement isolante en céramique (C) YSZ (zircone ZrO₂ stabilisée à l'yttrine Y₂0₃).

Chacune des deux couches SCA et C de la barrière thermique BT est déposée par projection thermique au moyen d'une torche à arc plasma.

Pour un exemple de réalisation d'une telle barrière thermique, on pourra avantageusement se référer à la demande de brevet FR 2.854.166, qui décrit un procédé d'obtention d'une barrière thermique dont la couche C de céramique (C) et la sous-couche d'accrochage (SCA) comportent des microfissures transverses (avec une composante principale normale au substrat), lesquelles assurent à la barrière thermique une certaine flexibilité et permettent d'absorber les multiples cycles thermo-dilatométriques différentiels à l'interface substrat/barrière thermique mais aussi dans la barrière thermique.

### PRÉSENTATION DE L'INVENTION

Un but général de l'invention est d'améliorer la résistance à l'érosion et au micro-écaillage de barrières thermiques à couche de céramique (C) YSZ à microfissures transverses de pièces telles que des pièces de turbines.

Un autre but de l'invention est d'améliorer la résistance à l'érosion de la couche C de céramique (C) YSZ isolante tout en conservant une gamme opératoire (gamme de tenue en température notamment) quasi équivalente et sans pour autant modifier notablement le temps total de réalisation et le coût des barrières thermiques.

À cet effet, l'invention propose un procédé d'obtention d'une barrière thermique à microfissures transverses suivant la revendication 1.

On sait en effet qu'une céramique (C) type YSZ fritte à partir d'une température de 1300°C sous air.

Par frittage, on entend ici et dans tout le présent texte, un traitement de consolidation d'un matériau (par exemple une poudre), obtenue en minimisant l'énergie du système grâce à un apport d'énergie (thermique, mécanique, avec un laser, un chalumeau plasma...) mais sans fusion d'au moins de l'un des constituants. Un tel frittage de la couche céramique (C) provoque son durcissement ; il réduit sa porosité et conduit à une amélioration de la résistance à l'érosion.

Pour se fritter, la céramique (C) doit rester dans une gamme :
- de température suffisamment élevée pour que la réaction de frittage puisse s'effectuer et,
- pendant un temps suffisamment long pour que la réaction de frittage puisse se dérouler
- avec des taux de porosité et d'infondu (infondu dans le sens de particules non liées) faibles (<5%) en brut de projection (« as sprayed » selon la terminologie anglo-saxonne généralement utilisée).

Or, sur les pièces de grandes dimensions la barrière thermique refroidit trop rapidement pour que la réaction de frittage puisse se prolonger sur une gamme de temps suffisante.

L'utilisation d'une torche à plasma permet de parfaitement contrôler le frittage.

Le procédé peut également avantageusement être utilisé dans le cas de pièces de petites dimensions.

Lors d'un tel post-traitement de frittage, on mesure en permanence la température du spot du faisceau à la surface de la couche C de céramique (C) et on pilote les paramètres de la torche en fonction de cette mesure. Les paramètres clés à piloter sont en particulier :
- la distance torche-pièce (reliée à la Température T) ;
- la vitesse d'avance v de la torche et le pourcentage de recouvrement R, la vitesse d'avance v et le pourcentage de recouvrement étant tous deux reliés au temps d'exposition à la dite température T.

Le frittage est en effet un phénomène dont la force motrice diffusionnelle est fonction du temps et de la température. La réalisation de ce frittage est favorisée par le pilotage réalisé.

Également, la surface de la pièce opposée à la couche C de céramique (C) est refroidie pour être maintenue à une température généralement inférieure à 950°C.

Au cours de l'étape de post-traitement, la surface de la couche de céramique (C) est balayée par le faisceau de sorte à atteindre une température de comprise entre 1300°C et 1700°C pendant quelques secondes, typiquement entre cinq secondes et une vingtaine de secondes

Le procédé proposé trouve avantageusement application dans le cas de pièces de grandes dimensions, les barrières thermiques microfissurées dont on revêt ce type de pièce étant classiquement peu satisfaisantes en termes de résistance à l'érosion.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 représente une vue schématique en coupe d'une pièce qui est par exemple une pièce utilisée dans une turbine, par exemple une turbine aéronautique, revêtue d'une sous-couche d'accrochage (SCA) et d'une barrière thermique ;
- la figure 2 représente schématiquement les grandes étapes d'une mise en œuvre possible de l'invention ;
- la figure 3 est une représentation schématique illustrant la mise en œuvre d'une étape de post-traitement de frittage, le soufflage de refroidissement étant mis en œuvre du côté de la paroi interne, à l'opposé du spot thermique et n'étant pas représenté sur ce schéma ;
- la figure 4 est une vue plane schématique illustrant le déplacement du spot thermique sur la pièce revêtue de la barrière thermique dans le cas d'un balayage mis en œuvre sur une pièce de petites dimensions.

### EXEMPLES DE MISE EN ŒUVRE

Ainsi qu'illustré sur la figure 2, un exemple de mise en œuvre possible comporte les différentes étapes suivantes :
- préparation par sablage de la surface de la pièce P à protéger (étape 1) ;
- réalisation de la couche d'accrochage (SCA) par dépôt APS en surface (étape 2) ;
- réalisation de la couche C de céramique (C) isolante et réfractaire YSL, également par dépôt APS (étape 3) ;
- post-traitement de frittage de la céramique (C) en vue d'améliorer sa résistance à l'érosion (étape 4).

### Pièces de grandes dimensions

Une pièce P à revêtir peut être une pièce de grande dimension, par exemple une paroi de chambre de combustion.

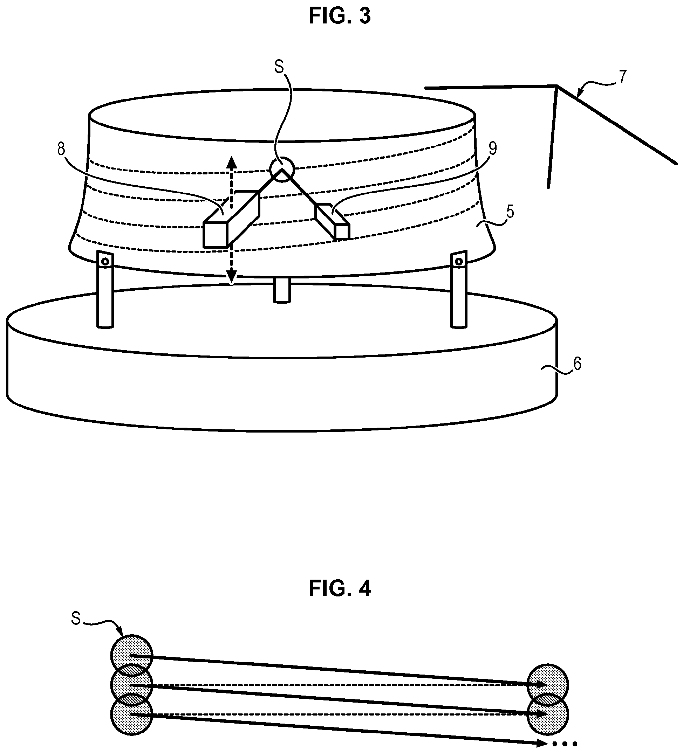

Une telle paroi de chambre de combustion peut se présenter sous la forme d'une pièce métallique 5 (figure 3) légèrement tronconique, dont les diamètres aux deux extrémités sont de l'ordre de 600 et 800 mm et dont la hauteur est par exemple de 800 mm.

Cette pièce est réalisée en un super-alliage à base de Nickel ou Cobalt. Elle présente par exemple une épaisseur 1 à 2 mm.

Pour la mise en œuvre des étapes 1 à 4, cette pièce 5 est placée sur un plateau tournant 6, dans une cabine de projection 7.

Une torche à arc plasma 8 assure, selon les procédés habituels, le dépôt de la sous-couche d'accrochage (SCA) (étape 2), puis le dépôt de la couche C de céramique (C) sur celle-ci (étape 3).

Notamment, le dépôt de la couche C de céramique (C) peut être réalisé dans des conditions assurant une microfissuration brute de projection (cf. FR 2854166 déjà cité).

Le post-traitement de l'étape 4 est ensuite mis en œuvre pour parfaire le frittage de la barrière thermique BT.

On notera que pour favoriser la fissuration lors du post-traitement de l'étape 4, on utilise une poudre de projection thermique fine et de granulométrie resserrée.

Une poudre fine et de granulométrie resserrée (poudre de type « fused and crushed » selon la terminologie anglo-saxonne généralement utilisée (fusion dans des fours à arc, suivi d'un refroidissement et d'un concassage) et de granulométrie entre 10 et 60 µm) a l'avantage de fondre de manière plus homogène.

Elle permet une porosité faible pour la couche de céramique (C) (< 5%).

Elle permet plus facilement une absence totale d'infondu.

Elle permet ainsi la réaction de frittage et de microfissuration.

Une poudre susceptible de convenir est par exemple l'Ampérit 831 de la société HC Starck.

Des forces d'adhérence élevées entre la couche C et la sous-couche SCA favorisent la génération de microfissurations dans l'épaisseur du revêtement plutôt que le long de l'interface sous-couche/couche.

L'utilisation d'une poudre fine et d'une granulométrie resserrée, permettant une adhérence de revêtement d'au moins 25MPa, contribuent à la génération, au cours du traitement thermique post-projection qui va être décrit (étape 4), d'une microfissuration de la barrière thermique BT, selon son sens transverse uniquement et à raison d'au moins 20 microfissures / 20mm.

La mise en œuvre de cette étape 4 de post-traitement se fait de la façon suivante.

La pièce 5 est déshabillée de tous ses masques et protecteurs, ceux-ci étant désormais inutiles, plus rien ne devant être projeté désormais sur la pièce 5.

Elle n'est pas démontée du plateau tournant 6 de la cabine de projection, sauf nécessité logistique.

La torche 8 est démarrée et la pièce est balayée au moyen de celle-ci préalablement à la mise en rotation du plateau, afin de chauffer quelques points de la barrière thermique BT à 1400-1450 °C.

Un pyromètre 9, préalablement calibré, positionné et étalonné, assure une mesure en temps réel de la température au point d'impact visé par la torche 8. Ce pyromètre 9 est embarqué sur un robot dans la cabine de projection 7, à l'intérieur de la pièce 5.

Il vise le point d'impact du spot S de la torche 8 sur la pièce 5 revêtue.

Il est choisi pour permettre des mesures de température entre 1200 et 1700°C. Dans le cas où la céramique (C) est une couche YSZ, le pyromètre est choisi pour fonctionner au-dessus de 8 µm, préférentiellement entre 11 et 13,6 µm, par exemple à 12.6 µm (longueur d'onde de Christiansen).

À ces valeurs en effet :
- le YSZ affiche une transmittance nulle (pas de mesures parasitées) ;
- son émittance est quasi indépendante de la température (pas de correction) ;
- son émissivité est de l'ordre de 1, ce qui permet une lecture directe de la température dans les conditions normales du corps noir.

On notera que la température en surface de la céramique (C) est fonction de :
- la vitesse de rotation de la pièce
- la distance torche-surface revêtue
- le pourcentage de recouvrement

Les paramètres relatifs à l'initiation du plasma en sortie de la torche (débit gaz plasmagène, tension et intensité...) sont, une fois la stabilité du plasma atteinte, maintenus indépendants par rapport au temps.

Ainsi, le pilotage de la température à la surface de la couche C de céramique (C) permet de maitriser la cinétique de frittage.

Lorsque le plateau 6 est lancé, la torche 8 est déplacée selon un mouvement de balayage vertical, qui se combine avec le déplacement en rotation du plateau, pour permettre au spot S que ladite torche projette sur la barrière thermique d'assurer un balayage hélicoïdal de celle-ci.

Les paramètres du plasma sont contrôlés pour que la température de surface mesurée par le pyromètre soit dans la gamme de température entre 1400-1600°C (température optimale du frittage).

Typiquement, la pièce 6 est totalement traitée en environ 35 minutes.

La torche 8 est par exemple un modèle F4 équipé d'une tuyère 6 mm ou encore une tuyère de 8 mm produisant un spot thermique plus large.

La vitesse de rotation du plateau 6 est par exemple de 1 m /min, tandis que le pas de l'hélice décrite sur la barrière thermique est de 12 mm.

La distance entre la sortie de la buse de la torche et la surface de la pièce varie entre 30 à 70 mm selon le diamètre de ladite buse et les paramètres de puissance de la torche.

D'autres combinaisons de paramètres sont bien entendu possibles.

On notera toutefois que la température de surface doit être d'au moins 1300°C, (préférentiellement entre 1400°C et 1450°C) et être atteinte en moins de 5-10 secondes (extrapolation à vitesse nulle) sous peine de favoriser le transfert thermique dans la pièce plutôt que le traitement de frittage. Par ailleurs, au cours de l'étape de post-traitement, la surface de la couche de céramique (C) est balayée par le faisceau de sorte à atteindre une température de comprise entre 1300°C et 1700°C pendant quelques secondes, typiquement entre cinq secondes et une vingtaine de secondes, afin de provoquer la réaction de durcissement.

Il est en outre recommandé que la température sur la face opposée, côté métallique, ne dépasse pas 950°C, préférentiellement 900°C (le cas échéant 1000°C en pointe) sous peine de détériorer la sous-couche par oxydation.

En particulier, pour éviter l'échauffement de la partie métallique de la pièce, celle-ci est refroidie durant tout le traitement réalisé à l'étape 4. On utilise à cet effet des jets d'air multiples et puissants. Ceux-ci peuvent être dirigés à la fois coté métallique et coté céramique (C). Bien entendu, du côté de la céramique (C), aucun flux ne sera dirigé à proximité du spot, les flux d'air étant écartés de celui-ci d'au moins +/- 100 mm.

Un tel refroidissement :
- stabilise plus rapidement la température globale de la pièce dès le début du traitement,
- évite la surchauffe susceptible d'endommager des parties métallique de la pièce

La température sur la face opposée à la barrière thermique, coté métallique, est mesurée en permanence soit par des patchs thermiques thermocolor, soit par pyrométrie ou par thermocouples.

Les paramètres de la torche et du soufflage de refroidissement sont contrôlés pour permettre de maintenir cette température au niveau souhaité.

### Pièces de petites dimensions

Le traitement de frittage de l'étape 4 peut également être utilisé pour microfissurer le revêtement de barrière thermique BT de pièces de petites dimensions, telles que par exemple une tuyère d'injection de kérosène.

Lors d'un dépôt conventionnel d'un système barrière thermique, une pièce de ce type subit une élévation de température. Cette température est suffisamment élevée pour que le frittage de la céramique (C) (initialement sous forme pré-frittée) puisse être entretenu par la mise en œuvre d'un post-traitement de frittage (étape 4).

Comme dans le cas de pièces de grandes dimensions, on utilise pour la réalisation de la couche C une poudre de projection fine et de granulométrie resserrée, permettant à ladite couche C de présenter une adhérence supérieure à 25 MPa par rapport à la sous-couche d'accrochage (SCA), en même temps que permettant une porosité inférieure à 5% et une absence d'infondu.

Le post-traitement par frittage de la couche C de céramique (C) (étape 4) et le pilotage en température mis en œuvre à l'occasion de ce post-traitement sont similaires à celui décrit ci-dessus pour une paroi de chambre à combustion.

En particulier, le pyromètre utilisé peut être du même type.

La pièce à traiter étant toutefois d'une géométrie différente, le chauffage est piloté par un balayage linéaire du spot de la torche 8 dans la hauteur de la pièce à traiter.

Un exemple de balayage est par exemple du type illustré sur la figure 4. La vitesse de balayage est de 1 m /min, tandis que le pas est de 12 mm. Le recouvrement du spot thermique d'une passe à l'autre y est d'au moins 10%.

## Revendications

1. Procédé d'obtention d'une barrière thermique à microfissures transverses, selon lequel une couche de céramique (C) de type YSZ est déposée au cours d'une étape de dépôt sur une sous-couche d'accrochage (SCA) par projection thermique au moyen d'une torche à arc plasma, ladite sous-couche d'accrochage (SCA) étant elle-même déposée sur la pièce à protéger, **caractérisé par le fait que** la couche de céramique (C) est déjà micro-fissurée à la suite de son étape de dépôt, un post-traitement de frittage étant réalisé au moyen d'un balayage de la couche de céramique (C) par le faisceau de la torche à arc plasma, la température au point d'impact du faisceau à la surface de la couche de céramique (C) étant, lors de ce balayage, comprise entre 1300°C et 1700°C, le post-traitement permettant de parfaire le frittage de la couche de céramique (C).

2. Procédé selon la revendication 1, **caractérisé en ce que** la température au point d'impact du faisceau à la surface de la couche de céramique (C) est, lors de ce balayage, comprise entre 1400°C et 1450°C.

3. Procédé selon l'une des revendications précédentes, **caractérisé en ce que** lors de ce post-traitement de frittage, on mesure en permanence la température du spot du faisceau à la surface de la couche de céramique (C) et on pilote les paramètres de la torche en fonction de cette mesure.

4. Procédé selon l'une des revendications 1 à 3, **caractérisé en ce que** la poudre de projection utilisée lors du dépôt de la couche de céramique (C) est une poudre de type « fused and crushed » présentant une granulométrie comprise entre 10 et 60 µm.

5. Procédé selon la revendication 4, **caractérisé en ce que** la couche de céramique (C) présente une porosité inférieure à 5%.

6. Procédé selon la revendication 4, **caractérisé en ce que** la couche de céramique (C) présente une adhérence supérieure à 25 MPa par rapport à la sous-couche d'accrochage (SCA).

7. Procédé selon l'une des revendications précédentes, **caractérisé en ce que** la surface de la pièce opposée à la couche de céramique (C) est refroidie pour être maintenue à une température généralement inférieure à 950°C.

8. Procédé selon l'une des revendications précédentes, **caractérisé en ce que** la pièce est une pièce de turbine.

9. Procédé selon la revendication 1, **caractérisé en ce qu'**au cours de l'étape de post-traitement, la surface de la couche de céramique (C) est balayée par le faisceau de sorte à atteindre une température de comprise entre 1300°C et 1700°C pendant quelques secondes, typiquement entre cinq secondes et une vingtaine de secondes.

## Patentansprüche

1. Verfahren zur Herstellung einer Wärmebarriere mit transversalen Mikrorissen, wobei eine Keramikschicht (C) vom Typ YSZ auf einer Verankerungs-Unterschicht (SCA) mittels Wärmeprojektion mit Hilfe eines Plasmabogenbrenners während eines Auftragungsschritt aufgebracht wird, wobei die Verankerungs-Unterschicht (SCA) selbst auf dem zu schützenden Teil aufgebracht wird, **dadurch gekennzeichnet, dass** die Keramikschicht (C) nach ihrem Auftragungsschritt bereits mikrogerissen ist, wobei eine Sinternachbehandlung durch Abtasten der Keramikschicht (C) mittels des Strahls des Plasmabogenbrenners durchgeführt wird, wobei die Temperatur am Punkt des Auftreffens des Strahls auf der Oberfläche der Keramikschicht (C) bei diesem Abtasten zwischen 1300 °C und 1700 °C beträgt, wobei die Nachbehandlung erlaubt, die Keramikschicht (C) fertig zu sintern.

2. Verfahren nach Anspruch 1, **dadurch gekennzeichnet, dass** die Temperatur am Punkt des Auftreffens des Strahls auf der Oberfläche der Keramikschicht (C) bei diesem Abtasten zwischen 1400 °C und 1450 °C beträgt.

3. Verfahren nach einem der vorangehenden Ansprüche, **dadurch gekennzeichnet, dass** bei dieser Sinternachbehandlung die Temperatur des Spots des Strahls auf der Oberfläche der Keramikschicht (C) ständig gemessen wird und die Parameter des Brenners in Abhängigkeit von dieser Messung gesteuert werden.

4. Verfahren nach einem der Ansprüche 1 bis 3, **dadurch gekennzeichnet, dass** das beim Aufbringen der Keramikschicht (C) verwendete Projektionspulver ein Pulver vom Typ "fused and crushed" ist, das eine Korngröße zwischen 10 und 60 µm aufweist.

5. Verfahren nach Anspruch 4, **dadurch gekennzeichnet, dass** die Keramikschicht (C) eine Porosität unter 5 % aufweist.

6. Verfahren nach Anspruch 4, **dadurch gekennzeichnet, dass** die Keramikschicht (C) eine Haftung über 25 MPa in Bezug auf die Verankerungs-Unterschicht (SCA) aufweist.

7. Verfahren nach einem der vorangehenden Ansprüche, **dadurch gekennzeichnet, dass** die Oberfläche des Teils gegenüber der Keramikschicht (C) abgekühlt wird, um auf einer Temperatur im Allgemeinen unter 950 °C gehalten zu werden.

8. Verfahren nach einem der vorangehenden Ansprüche, **dadurch gekennzeichnet, dass** das Teil ein Turbinenteil ist.

9. Verfahren nach Anspruch 1, **dadurch gekennzeichnet, dass** beim Nachbehandlungsschritt die Oberfläche der Keramikschicht (C) von dem Strahl derart abgetastet wird, dass eine Temperatur zwischen 1300 °C und 1700 °C während einiger Sekunden, in typischer Weise zwischen fünf Sekunden und zirka zwanzig Sekunden, erreicht wird.

## Claims

1. A method to obtain a thermal barrier with transverse microcracks, according to which a ceramic layer (C) of YSZ type is deposited during a deposit step on a bond sublayer (SCA) via thermal spraying using a plasma arc torch, said bond sublayer (SCA) itself being deposited on the part to be protected, **characterized by** the fact that the ceramic layer (C) is already microcracked after its deposit step, wherein a sintering post-treatment is performed by scanning the ceramic layer (C) with the beam of the plasma arc torch, the temperature at the point of impact of the beam on the surface of the ceramic layer (C) during this scanning being between 1300°C and 1700°C, the post-treatment allowing improved sintering of the ceramic layer (C).

2. The method according to claim 1, **characterized in that** the temperature at the point of impact of the beam on the surface of the ceramic layer (C) during this scanning is between 1400°C and 1450°C.

3. The method according to one of the preceding claims, **characterized in that** during this sintering post-treatment the temperature of the spot of the beam on the surface of the ceramic layer (C) is permanently measured and the torch parameters are controlled as a function of this measurement.

4. The method according to one of claims 1 to 3, **characterized in that** the spray powder used when depositing the ceramic layer (C) is a powder of fused and crushed type having a particle size of between 10 and 60 µm.

5. The method according to claim 4, **characterized in that** the ceramic layer (C) has less than 5% porosity.

6. The method according to claim 4, **characterized in that** the ceramic layer (C) has bonding higher than 25 MPa with the bond sublayer (SCA).

7. The method according to one of the preceding claims, **characterized in that** the surface of the part opposite the ceramic layer (C) is cooled so that it is held at a temperature generally lower than 950°C.

8. The method according to one of the preceding claims, **characterized in that** the part is a turbine part.

9. The method according to claim 1, **characterized in that** during the post-treatment step the surface of the ceramic layer (C) is scanned by the beam so as to reach a temperature of between 1300°C and 1700°C for a few seconds, typically between five seconds and about twenty seconds.
